# EUROPÄISCHE PATENTSCHRIFT

(11) **EP 3 822 374 B1**
(45) Veröffentlichungstag und Bekanntmachung des Hinweises auf die Patenterteilung: **04.10.2023**
(21) Anmeldenummer: 19209661.8
(22) Anmeldetag: 18.11.2019
(51) Int. Cl.: C22B 3/46, C22B 3/00, C22B 11/06

(54) **VERFAHREN ZUR RÜCKGEWINNUNG VON EDELMETALL**
METHOD FOR RECOVERING PURE METAL
PROCÉDÉ DE RÉCUPÉRATION DE MÉTAL PRÉCIEUX

(43) Veröffentlichungstag der Anmeldung: 19.05.2021
(73) Patentinhaber: Heraeus Deutschland GmbH & Co. KG, 63450 Hanau (DE)
(72) Erfinder: STEMMLER, Marco, 63450 Hanau (DE)
(74) Vertreter: Heraeus IP

(56) Entgegenhaltungen:
- DE-A1- 2 914 439
- GB-A- 1 337 739
- US-A1- 2017 198 370
- COLLINS SAGURU ET AL: "A review of recent studies into hydrometallurgical methods for recovering PGMs from used catalytic converters", HYDROMETALLURGY., Bd. 182, 1. Dezember 2018 (2018-12-01), Seiten 44-56, XP055691710, NL ISSN: 0304-386X, DOI: 10.1016/j.hydromet.2018.10.012

## Beschreibung

Die Erfindung betrifft ein Verfahren zur Rückgewinnung von Edelmetall aus einer gelöstes Edelmetall sowie freies Chlor enthaltenden sauren wässrigen Lösung.

Der hierin verwendete Begriff "gelöstes Edelmetall" bedeutet wässrig gelöstes Edelmetall in Form einer oder mehrerer gelöst vorliegender Edelmetallverbindungen, in denen das Edelmetall eine Oxidationsstufe >0 aufweist.

Im Rahmen eines nasschemischen Edelmetallrecyclings oder einer nasschemischen Edelmetallraffination ist üblicherweise eine Fällung schwerlöslicher Edelmetallchlorokomplexsalze umfasst. Dabei fallen häufig saure und freies Chlor enthaltende Mutterlaugen mit einem zwar nur noch geringen jedoch dennoch rückgewinnungswürdigen Edelmetallanteil an. Die weitgehende Rückgewinnung dieses in Lösung befindlichen Edelmetallanteils wird reduktiv verwirklicht, beispielsweise durch Zusatz von Eisenpulver oder Zinkpulver. Zuvor muss jedoch freies Chlor entfernt werden, insbesondere um die Bildung von Chlorknallgas zu vermeiden, beispielsweise in einer Abluftstrecke. Chlorknallgas kann gebildet werden beim ungewollten Kontakt des freien Chlors mit Wasserstoff, welcher aufgrund der unvermeidlichen Nebenreaktion des unedlen Eisens oder Zinns mit der sauren Mutterlauge entsteht. Es ist bislang gängige Praxis, das freie Chlor vor Zusatz des Eisen- oder Zinkpulvers aus solchen Mutterlaugen mittels Durchlüftens derselben mit Druckluft über einen Zeitraum von üblicherweise 4 bis 48 Stunden auszutreiben.

CN106518605A offenbart die weitgehende Befreiung eines in einem anderen chemischen Zusammenhang (Chlorbenzolherstellung) gebildeten sauren Abwassers von freiem Chlor durch Zusatz von Eisen(II)chlorid unter Bildung von Eisen(III)chlorid. Ein Verfahren zur Rückgewinnung von Edelmetallen ist auch bekannt aus US 2017/198370 und DE 2914439.

Die Erfindung betrifft ein Verfahren zur Rückgewinnung von Edelmetall aus einer gelöstes Edelmetall sowie freies Chlor enthaltenden sauren wässrigen Lösung umfassend die aufeinander folgenden Schritte:
(1) Zusammengeben eines Salzes eines in einer niedrigen Oxidationsstufe vorliegenden Nichtedelmetalls als Feststoff oder als wässrige Lösung und der sauren wässrigen Lösung unter Verbrauch des freien Chlors und Bildung einer sauren wässrigen Mischung, und
(2) Zugeben von nichtedlem Metall zur in Schritt (1) gebildeten sauren wässrigen Mischung unter Ausfällung elementaren Edelmetalls,

wobei die saure wässrige Lösung sich auszeichnet durch (i) einen Anteil an gelöstem Edelmetall im Bereich von 100 bis 500 mg/l, (ii) einen pH-Wert im Bereich von -0,8 bis + 1 und (iii) einen Gehalt an freiem Chlor im Bereich von 0,1 bis 1 g/l
   oder
durch (i) einen Anteil an gelöstem Edelmetall im Bereich von 100 bis 500 mg/l, (ii) einen pH-Wert im Bereich von -0,8 bis + 1 und (iii) einen Gehalt an freiem Chlor im Bereich von 1000 bis 10000 Gew.-ppm, und
wobei das gelöste Edelmetall mindestens ein aus der aus Gold, Platin, Palladium, Rhodium, Iridium, Osmium und Ruthen bestehenden Gruppe ausgewähltes Edelmetall umfasst.

Aus einem anderen Blickwinkel kann man die Erfindung betrachten als Verfahren zur Vermeidung der Bildung von Chlorknallgas während der Rückgewinnung von Edelmetall aus einer gelöstes Edelmetall sowie freies Chlor enthaltenden sauren wässrigen Lösung umfassend die aufeinander folgenden Schritte:
(1) Zusammengeben eines Salzes eines in einer niedrigen Oxidationsstufe vorliegenden Nichtedelmetalls als Feststoff oder als wässrige Lösung und der sauren wässrigen Lösung unter Verbrauch des freien Chlors und Bildung einer sauren wässrigen Mischung, und
(2) Zugeben von nichtedlem Metall zur in Schritt (1) gebildeten sauren wässrigen Mischung unter Ausfällung elementaren Edelmetalls,

wobei die saure wässrige Lösung sich auszeichnet durch (i) einen Anteil an gelöstem Edelmetall im Bereich von 100 bis 500 mg/l, (ii) einen pH-Wert im Bereich von -0,8 bis + 1 und (iii) einen Gehalt an freiem Chlor im Bereich von 0,1 bis 1 g/l
   oder
durch (i) einen Anteil an gelöstem Edelmetall im Bereich von 100 bis 500 mg/l, (ii) einen pH-Wert im Bereich von -0,8 bis + 1 und (iii) einen Gehalt an freiem Chlor im Bereich von 1000 bis 10000 Gew.-ppm, und
wobei das gelöste Edelmetall mindestens ein aus der aus Gold, Platin, Palladium, Rhodium, Iridium, Osmium und Ruthen bestehenden Gruppe ausgewähltes Edelmetall umfasst.

Aus noch einem anderen Blickwinkel kann man die Erfindung betrachten als Verfahren zur Beseitigung freien Chlors im Rahmen der Rückgewinnung von Edelmetall aus einer gelöstes Edelmetall sowie freies Chlor enthaltenden sauren wässrigen Lösung umfassend die aufeinander folgenden Schritte:
(1) Zusammengeben eines Salzes eines in einer niedrigen Oxidationsstufe vorliegenden Nichtedelmetalls als Feststoff oder als wässrige Lösung und der sauren wässrigen Lösung unter Verbrauch des freien Chlors und Bildung einer sauren wässrigen Mischung, und
(2) Zugeben von nichtedlem Metall zur in Schritt (1) gebildeten sauren wässrigen Mischung unter Ausfällung elementaren Edelmetalls,

wobei die saure wässrige Lösung sich auszeichnet durch (i) einen Anteil an gelöstem Edelmetall im Bereich von 100 bis 500 mg/l, (ii) einen pH-Wert im Bereich von -0,8 bis + 1 und (iii) einen Gehalt an freiem Chlor im Bereich von 0,1 bis 1 g/l
   oder
durch (i) einen Anteil an gelöstem Edelmetall im Bereich von 100 bis 500 mg/l, (ii) einen pH-Wert im Bereich von -0,8 bis + 1 und (iii) einen Gehalt an freiem Chlor im Bereich von 1000 bis 10000 Gew.-ppm, und
wobei das gelöste Edelmetall mindestens ein aus der aus Gold, Platin, Palladium, Rhodium, Iridium, Osmium und Ruthen bestehenden Gruppe ausgewähltes Edelmetall umfasst.

Bei den Schritten (1) und (2) handelt es sich um aufeinander folgende Schritte, d.h. um direkt ohne Zwischenschritte aufeinander folgende Schritte oder um aufeinander folgende Schritte mit einem oder mehreren Zwischenschritten.

In Schritt (1) des erfindungsgemäßen Verfahrens werden ein Salz eines in einer niedrigen Oxidationsstufe vorliegenden Nichtedelmetalls (in der weiteren Folge auch kurz als "Salz" bezeichnet) als Feststoff oder als wässrige Lösung und eine gelöstes Edelmetall sowie freies Chlor enthaltende saure wässrige Lösung (in der weiteren Folge auch kurz als "saure wässrige Lösung" bezeichnet) zusammengegeben. Es können auch mehrere verschiedene solcherart Salze in Kombination verwendet werden. Bevorzugt gibt man Salz oder die wässrige Salzlösung zur sauren wässrigen Lösung. Alternativ, jedoch weniger bevorzugt, kann die saure wässrige Lösung dem Salz oder der wässrigen Salzlösung zugesetzt werden.

Bei der sauren wässrigen Lösung kann es sich insbesondere um eine einem nasschemischen Edelmetallrecycling oder einer nasschemischen Edelmetallraffination entstammende Mutterlauge handeln. Derartige Mutterlaugen fallen beispielsweise nach einer Fällung von Edelmetall in Form schwerlöslicher Chlorokomplexsalze aus wässrigen Lösungen an.

Die saure wässrige Lösung, insbesondere in Form besagter Mutterlauge, zeichnet sich aus durch (i) einen Anteil an gelöstem Edelmetall im Bereich von 100 bis 500 mg/l, (ii) einen pH-Wert im Bereich von -0,8 bis + 1 und (iii) einen Gehalt an freiem Chlor (gelöstes Cl₂) im Bereich von 0,1 bis 1 g/l oder im Bereich von 1000 bis 10000 Gew.-ppm. Bei dem gelösten Edelmetall handelt es sich um ein oder mehrere aus der aus Gold, Platin, Palladium, Rhodium, Iridium, Osmium und Ruthen bestehenden Gruppe ausgewählte Edelmetalle. Der niedrige pH-Wert der sauren wässrigen Lösung wird wesentlich oder sogar ausschließlich durch die Anwesenheit von Salzsäure verursacht. Neben Salzsäure können allerdings auch andere anorganische Säuren wie insbesondere Salpetersäure in der sauren wässrigen Lösung enthalten sein.

Das in Schritt (1) des erfindungsgemäßen Verfahrens als Feststoff oder als wässrige Lösung verwendete Salz eines in einer niedrigen Oxidationsstufe vorliegenden Nichtedelmetalls ist wasserlöslich. Die Wasserlöslichkeit liegt im Allgemeinen beispielsweise bei mehr als 100 g/l bei 20°C, in der Regel bei mehreren hundert Gramm pro Liter Wasser bei 20°C. Der hierin gebrauchte Ausdruck "in einer niedrigen Oxidationsstufe vorliegendes Nichtedelmetall" bedeutet ein Nichtedelmetall, welches verschiedene positive Oxidationsstufen annehmen kann und in einer positiven Oxidationsstufe vorliegt, aus der es durch Reaktion mit Chlor in eine höhere Oxidationsstufe befördert werden kann. Beispiele umfassen die Nichtedelmetalle Eisen und Zinn, jeweils in der Oxidationsstufe +2; Eisen(II) kann durch Reaktion mit Chlor in Eisen(III) überführt werden, Zinn(II) in Zinn(IV).

Konkrete Beispiele für in Schritt (1) des erfindungsgemäßen Verfahrens als Feststoff oder als wässrige Lösung verwendbare Salze umfassen Zinn(II)salze, insbesondere jedoch Eisen(II)salze. Beispielsweise kann Zinn(II)salz oder Eisen(II)salz oder Zinn(II)salz in Kombination mit Eisen(II)salz verwendet werden. Beispiele für Zinn(II)salze umfassen Zinn(II)chlorid und Zinn(II)sulfat. Beispiele für Eisen(II)salze umfassen Eisen(II)chlorid, Eisen(II)sulfat und Eisen(II)nitrat; Eisen(II)chlorid und Eisen(II)sulfat sind bevorzugt.

Das Salz wird üblicherweise in stöchiometrischer oder überstöchiometrischer Menge, bezogen auf zu verbrauchendes freies Chlor, verwendet. Falls überstöchiometrisch gearbeitet wird, wird im Allgemeinen nicht mehr als die zehnfache stöchiometrische Menge verwendet. Bevorzugt wird stöchiometrisch gearbeitet. Am Beispiel des bevorzugt verwendeten Eisen(II)chlorids erläutert, bedeutet dies, dass pro Mol freien Chlors (Cl₂) üblicherweise 2 Mol Eisen(II)chlorid verwendet werden, denn die Reaktion lautet bei diesem Beispiel: 2 FeCl₂ + Cl₂ → 2 FeCl₃.

Das Salz kann als Feststoff oder als wässrige Lösung verwendet werden. Bei seiner Verwendung als wässrige Lösung wird bevorzugt mit einer eher konzentrierten Lösung gearbeitet, beispielsweise in einem Konzentrationsbereich von 10 bis 30 Gew.-%. Dieses Vorgehen bietet Handlingvorteile und vermeidet den Umgang mit einem unnötig hohen Volumen an nach Beendigung von Schritt (1) gebildeter saurer wässriger Mischung.

Nach erfolgtem Zusatz des Salzes zur sauren wässrigen Lösung oder umgekehrt und gutem Durchmischen gibt man der Mischung im Allgemeinen 5 bis 15 min Zeit bei 20 bis 60°C zum Verbrauch des freien Chlors und Ausbildung der sauren wässrigen Mischung. Dabei kann fortwährend durchmischt werden, beispielsweise durch Rühren. Eine Reaktionsverfolgung kann mit üblichen Methoden erfolgen, beispielsweise mittels des dem Fachmann bekannten lodstärketests oder potentiometrisch. Im letzteren Fall kann beispielsweise Eisen(II)salz bis zum Erreichen eines im Bereich von 470 bis 550 mV liegenden Potentials zugegeben werden. Nach Beendigung der Reaktion liegt der Gehalt der gebildeten sauren wässrigen Mischung an freiem Chlor üblicherweise bei < 50 Gew.-ppm; mit anderen Worten, die ursprüngliche saure wässrige Lösung ist vom freien Chlor mit Blick auf dessen Nachweisgrenze im Wesentlichen oder praktisch befreit worden. Schritt (1) ist damit beendet. Die gebildete saure wässrige Mischung enthält weiterhin das gelöste Edelmetall und hat weiterhin einen im Wesentlichen unverändert niedrigen pH-Wert. Sie kann ferner unreagiertes Salz enthalten, falls dieses in vorerwähnter überstöchiometrischer Menge verwendet worden ist. Sie enthält in jedem Falle ein oxidiertes Reaktionsprodukt des verwendeten Salzes als Folge von dessen Chlorierung.

Nach Beendigung von Schritt (1) des erfindungsgemäßen Verfahrens schließt sich Schritt (2) der Zugabe von nichtedlem Metall zur in Schritt (1) gebildeten sauren wässrigen Mischung unter Ausfällung elementaren Edelmetalls an.

Beispiele für in Schritt (2) verwendbare nichtedle Metalle umfassen Zink und insbesondere Eisen. Beide nichtedlen Metalle können in Kombination verwendet werden. Bevorzugt wird das nichtedle Metall in Pulverform zugegeben. Besonders bevorzugt wird Eisenpulver verwendet.

Das nichtedle Metall wird in überstöchiometrischer Menge, bezogen auf gelöst vorliegendes und elementar auszufällendes Edelmetall zugesetzt; beispielsweise wird eine bis zu 1000-fache Menge der stöchiometrischen Menge an nichtedlem Metall verwendet. Selbst dann ist in der sauren wässrigen Mischung genügend Säure respektive Salzsäure enthalten, um überschüssiges nichtedles Metall aufzulösen.

Das in der sauren wässrigen Mischung enthaltene gelöste Edelmetall wird zum metallischen Edelmetall reduziert und fällt als Niederschlag aus und kann abgetrennt werden, beispielsweise durch Filtration. Bevorzugt wartet man mit dem Abtrennen, bis das nichtedle Metall vollständig aufgelöst worden ist. Es wird angenommen, dass der durch die Reaktion des nichtedlen Metalls mit der Säure gebildete Wasserstoff, insbesondere der in statu nascendi gebildete Wasserstoff, als Reduktionsmittel wirkt. Das nach Abtrennung des ausgefallenen elementaren Edelmetalls erhaltene wässrige Medium in Form einer sauren (pH im Allgemeinen im Bereich -0,5 bis +3) gelöstes Nichtedelmetall enthaltenden wässrigen Lösung zeichnet sich durch einen nur noch geringen Anteil an gelöstem Edelmetall im Bereich von < 5 mg/l, insbesondere 1-2 mg/l aus und kann einer üblichen Abwasserbehandlung mit Neutralisation, Nichtedelmetallfällung, lonenaustausch etc. zugeführt werden.

Das erfindungsgemäße Verfahren zeichnet sich durch mehrere Vorteile gegenüber dem eingangs skizzierten Verfahren zur Rückgewinnung von Edelmetall aus einer gelöstes Edelmetall sowie freies Chlor enthaltenden sauren wässrigen Lösung aus, bei dem das freie Chlor mittels Druckluftdurchlüftung ausgetrieben wird. Die Vorteile sind im Einzelnen:
1. Die Gefahr einer Chlorknallgasbildung nach Zugabe des nichtedlen Metalls kann ausgeschlossen werden.
2. Freies Chlor muss nicht mittels Druckluftdurchlüftung ausgetrieben werden.
3. Der Energieaufwand und damit die Kosten einer Drucklufterzeugung für eine Druckluftdurchlüftung entfallen.
4. Die notwendige Zeitdauer der Druckluftdurchlüftung von üblicherweise 4 bis 48 Stunden entfällt und die Beseitigung des freien Chlors gelingt innerhalb 5 bis 15 Minuten mit den Vorteilen einer kürzeren Produktionsanlagenbelegungsdauer pro Batch und einer geringeren Edelmetallbindung.
5. Eine Abluftbehandlung zwecks Entfernung von Chlorgas ist nicht notwendig; es werden weder entsprechend dimensionierte Anlagen noch Auswaschflüssigkeit für chlorhaltige Abluft benötigt. Es fällt keine zu entsorgende oder aufzuarbeitenden verbrauchte Auswaschflüssigkeit an.
6. Mit freiem Chlor in der Atemluft verbundene Arbeitsschutzproblematiken oder -aufwand werden vermieden.

### Ausführungsbeispiel

1000 ml einer nach Edelmetallsalzfällung erhaltenen salzsauren (pH = 0,3) und freies Chlor enthaltenden Mutterlauge mit einer Restedelmetallkonzentration von 17 Gew.-ppm Au(III), 18 Gew.-ppm Pd(IV), 62 Gew.-ppm Rh(III) und 44 Gew.-ppm Ru(IV) wurden bei 40°C portionsweise mit der bezogen auf das freie Chlor äquimolaren Menge von 7,50 g (0,027 mol) Fe(II)SO₄ × 7H₂O versetzt. Hierbei sank das Redoxpotential von 1021 mV innerhalb von 5 Minuten auf 503 mV, entsprechend einem praktisch vollständigen Verbrauch des freien Chlors. Die zugegebene Menge Fe(II)SO₄ × 7 H₂O entsprach 0,96 g gelöstem freien Chlor. Nach einer Nachrührzeit von 15 Minuten wurde das in der salzsauren Mutterlauge weiterhin gelöst enthaltene Edelmetall durch portionsweise Zugabe von 30 g Eisenpulver bei 40°C innerhalb von 2 Stunden reduziert. Überschüssiges Eisenpulver löste sich in dem salzsauren Medium vollständig auf. Der entstandene Edelmetallniederschlag konnte mittels Filtration über einen Filter abgetrennt werden. Die Edelmetallkonzentration des dabei gewonnenen Filtrats betrug: Au < 5 Gew.-ppm; Pd < 5 Gew.-ppm; Rh < 5 Gew.-ppm; Ru = 6 Gew.-ppm. Das Filtrat konnte einer Abwassernachbehandlung vor Einleitung in die Kanalisation zugeführt werden.

## Patentansprüche

1. Verfahren zur Rückgewinnung von Edelmetall aus einer gelöstes Edelmetall sowie freies Chlor enthaltenden sauren wässrigen Lösung und/oder
zur Vermeidung der Bildung von Chlorknallgas während der Rückgewinnung von Edelmetall aus einer gelöstes Edelmetall sowie freies Chlor enthaltenden sauren wässrigen Lösung und/oder
zur Beseitigung freien Chlors im Rahmen der Rückgewinnung von Edelmetall aus einer gelöstes Edelmetall sowie freies Chlor enthaltenden sauren wässrigen Lösung, umfassend die aufeinander folgenden Schritte:
(1) Zusammengeben eines Salzes eines in einer niedrigen Oxidationsstufe vorliegenden Nichtedelmetalls als Feststoff oder als wässrige Lösung und der sauren wässrigen Lösung unter Verbrauch des freien Chlors und Bildung einer sauren wässrigen Mischung, und
(2) Zugeben von nichtedlem Metall zur in Schritt (1) gebildeten sauren wässrigen Mischung unter Ausfällung elementaren Edelmetalls,
wobei die saure wässrige Lösung sich auszeichnet durch (i) einen Anteil an gelöstem Edelmetall im Bereich von 100 bis 500 mg/l, (ii) einen pH-Wert im Bereich von -0,8 bis + 1 und (iii) einen Gehalt an freiem Chlor im Bereich von 0,1 bis 1 g/l
oder
durch (i) einen Anteil an gelöstem Edelmetall im Bereich von 100 bis 500 mg/l, (ii) einen pH-Wert im Bereich von -0,8 bis + 1 und (iii) einen Gehalt an freiem Chlor im Bereich von 1000 bis 10000 Gew.-ppm, und
wobei das gelöste Edelmetall mindestens ein aus der aus Gold, Platin, Palladium, Rhodium, Iridium, Osmium und Ruthen bestehenden Gruppe ausgewähltes Edelmetall umfasst.

2. Verfahren nach Anspruch 1, wobei es sich bei der sauren wässrigen Lösung um eine einem nasschemischen Edelmetallrecycling oder einer nasschemischen Edelmetallraffination entstammende Mutterlauge handelt.

3. Verfahren nach einem der vorhergehenden Ansprüche, wobei die saure wässrige Lösung Salzsäure und gegebenenfalls auch andere anorganische Säuren umfasst.

4. Verfahren nach einem der vorhergehenden Ansprüche, wobei das in Schritt (1) verwendete Salz ein oder mehrere Salze ausgewählt unter Zinn(II)salzen, Eisen(II)salzen und Kombinationen davon umfasst.

5. Verfahren nach einem der vorhergehenden Ansprüche, wobei das in Schritt (1) verwendete Salz in stöchiometrischer oder überstöchiometrischer Menge, bezogen auf zu verbrauchendes freies Chlor, verwendet wird.

6. Verfahren nach einem der vorhergehenden Ansprüche, wobei das in Schritt (2) verwendete nichtedle Metall ausgewählt ist unter Zink, Eisen und Kombinationen von Zink und Eisen, bevorzugt jeweils in Pulverform.

7. Verfahren nach einem der vorhergehenden Ansprüche, wobei das in Schritt (2) verwendete nichtedle Metall in überstöchiometrischer Menge, bezogen auf gelöst vorliegendes und elementar auszufällendes Edelmetall, zugesetzt wird.

## Claims

1. A method for recovering noble metal from an acidic aqueous solution containing dissolved noble metal and free chlorine and/or
for preventing the formation of an explosive mixture of hydrogen and chlorine gas during the recovery of noble metal from an acidic aqueous solution containing dissolved noble metal and free chlorine
and/or
for eliminating free chlorine as part of the recovery of noble metal from an acidic aqueous solution containing dissolved noble metal and free chlorine, the method comprising the successive steps of:
(1) combining a salt of a non-noble metal present in a low oxidation state as a solid or as an aqueous solution with the acidic aqueous solution, so as to consume the free chlorine and form an acidic aqueous mixture, and
(2) adding non-noble metal to the acidic aqueous mixture formed in step (1), so as to precipitate elementary noble metal,
wherein the acidic aqueous solution is **characterized by** (i) a fraction of dissolved noble metal in the range from 100 to 500 mg/l, (ii) a pH in the range from -0.8 to +1 and (iii) a free chlorine content in the range from 0.1 to 1 g/l
or
by (i) a fraction of dissolved noble metal in the range from 100 to 500 mg/l, (ii) a pH in the range from -0.8 to +1 and (iii) a free chlorine content in the range from 1000 to 10,000 ppm by weight, and
wherein the dissolved noble metal comprises at least one noble metal selected from the group consisting of gold, platinum, palladium, rhodium, iridium, osmium and ruthenium.

2. The method according to claim 1, wherein the acidic aqueous solution is a mother liquor originating from wet-chemical noble metal recycling or wet-chemical noble metal refining.

3. The method according to either of the preceding claims, wherein the acidic aqueous solution comprises hydrochloric acid and optionally also other inorganic acids.

4. The method according to any of the preceding claims, wherein the salt used in step (1) comprises one or more salts selected from tin(II) salts, iron(II) salts and combinations thereof.

5. The method according to any of the preceding claims, wherein the salt used in step (1) is used in a stoichiometric or superstoichiometric amount in relation to the free chlorine to be consumed.

6. The method according to any of the preceding claims, wherein the non-noble metal used in step (2) is selected from zinc, iron and combinations of zinc and iron, preferably in each case in powder form.

7. The method according to any of the preceding claims, wherein the non-noble metal used in step (2) is added in a superstoichiometric amount in relation to the noble metal which is present in dissolved form and to be precipitated in elemental form.

## Revendications

1. Procédé pour la récupération de métal noble à partir d'une solution aqueuse acide contenant un métal noble dissout ainsi que du chlore libre et/ou
pour la prévention de la formation de gaz détonant de chlore pendant la récupération de métal noble à partir d'une solution aqueuse acide contenant un métal noble dissout ainsi que du chlore libre
et/ou
pour l'élimination de chlore libre dans le cadre de la récupération de métal noble à partir d'une solution aqueuse acide contenant un métal noble dissout ainsi que du chlore libre, comprenant les étapes successives suivantes :
(1) combinaison d'un sel d'un métal non noble présent dans un faible degré d'oxydation en tant que solide ou en tant que solution aqueuse et de la solution aqueuse acide avec consommation du chlore libre et formation d'un mélange aqueux acide, et
(2) ajout d'un métal non noble au mélange aqueux acide formé à l'étape (1) avec précipitation d'un métal noble élémentaire,
la solution aqueuse acide se distinguant par (i) une proportion de métal noble dissout dans la plage de 100 à 500 mg/l, (ii) un pH dans la plage de -0,8 à +1 et (iii) une teneur en chlore libre dans la plage de 0,1 à 1 g/l
ou
par (i) une proportion de métal noble dissout dans la plage de 100 à 500 mg/l, (ii) un pH dans la plage de -0,8 à +1 et (iii) une teneur en chlore libre dans la plage de 1 000 à 10 000 ppm en poids, et
le métal noble dissout comprenant au moins un métal noble choisi dans le groupe constitué par l'or, le platine, le palladium, le rhodium, l'iridium, l'osmium et le ruthénium.

2. Procédé selon la revendication 1, la solution aqueuse acide étant une liqueur mère provenant d'un recyclage de métaux nobles chimique par voie humide ou d'un raffinage de métaux nobles chimique par voie humide.

3. Procédé selon l'une des revendications précédentes, la solution aqueuse acide comprenant de l'acide chlorhydrique et éventuellement aussi d'autres acides inorganiques.

4. Procédé selon l'une des revendications précédentes, le sel utilisé à l'étape (1) comprenant un ou plusieurs sels choisis parmi les sels d'étain(II), les sels de fer(ll) et leurs combinaisons.

5. Procédé selon l'une des revendications précédentes, le sel utilisé à l'étape (1) étant utilisé dans une quantité stoechiométrique ou surstoechiométrique par rapport au chlore libre à consommer.

6. Procédé selon l'une des revendications précédentes, le métal non noble utilisé à l'étape (2) étant choisi parmi le zinc, le fer et des combinaisons de zinc et de fer, de préférence respectivement sous forme de poudre.

7. Procédé selon l'une des revendications précédentes, le métal non noble utilisé à l'étape (2) étant ajouté dans une quantité surstoechiométrique par rapport au métal noble présent sous forme dissoute et à précipiter à l'état élémentaire.
